# EUROPEAN PATENT SPECIFICATION

(11) **EP 3 905 153 B1**
(45) Date of publication and mention of the grant of the patent: **24.12.2025**
(21) Application number: 19904165.8
(22) Date of filing: 07.03.2019
(51) Int. Cl.: G06Q 10/06, G05B 19/418, G05B 23/02, G06Q 50/04

(54) **MOTION ANALYSIS DEVICE, MOTION ANALYSIS METHOD, AND MOTION ANALYSIS PROGRAM**
BEWEGUNGSANALYSEVORRICHTUNG, BEWEGUNGSANALYSEVERFAHREN UND BEWEGUNGSANALYSEPROGRAMM
DISPOSITIF D'ANALYSE DE MOUVEMENT, PROCÉDÉ D'ANALYSE DE MOUVEMENT ET PROGRAMME D'ANALYSE DE MOUVEMENT

(30) Priority: 26.12.2018 JP 2018243183
(43) Date of publication of application: 03.11.2021
(73) Proprietor: OMRON Corporation, Shiokoji-dori, Shimogyo-ku, Kyoto-shi Kyoto 600-8530 (JP)
(72) Inventor: KAWAI, Naohiro, Kyoto 619-0283 (JP)
(74) Representative: Becker, Eberhard
(86) International application number: PCT/JP2019/009129
(87) International publication number: WO 2020/136924

(56) References cited:
- EP-A1- 2 407 844
- WO-A1-2019/021592
- WO-A2-2018/073422
- JP-A- 2018 073 176
- JP-A- 2019 028 559
- JP-A- H07 254 024
- US-A1- 2016 239 769
- US-A1- 2018 074 479
- SHINGO SHIGEO ET AL: "A Study of the Toyota Production System", 1 October 1989 (1989-10-01), pages i-xxxiv,1 - 257, XP055947405, ISBN: 9780915299171, Retrieved from the Internet <URL:http://brharnetc.edu.in/br/wp-content/uploads/2018/11/3.pdf>

## Description

### [Technical Field]

The present invention relates to a motion analysis device, a motion analysis method, and a motion analysis program.

### [Background Art]

In a related art, one or more cameras may be installed on a manufacturing line of a product to record a motion of an operator in an image or a moving image. Further, there are cases in which image recognition processing may be performed on a captured image or moving image to analyze the motion of the operator.

For example, the following Patent Literature 1 describes a motion deviation management system which determines the presence or absence of an operating deviation for performed operating content, records deviation record data including information indicating an occurrence of deviation, operating content identification information, and a product serial number, and determines that a product to be shipped cannot be shipped if there is a record of "operating deviation" in the manufacturing record of the product to be shipped and the deviation record corresponding to the operating deviation does not have information of "deviation confirmed."

### [Literature of related art]

### [Patent Literature]

[Patent Literature 1]
Japanese Patent Laid-Open No. 2017-21397

Non-patent literature "Shingo Shigeo ET AL: "A Study of the Toyota Production System", 1 October 1989, pages i-xxxiv, 1-257, XP055947405, ISBN: 9780915299171" relates to industrial engineering rationale for the priority of process-based over operational improvements in manufacturing. The basic mechanisms of the Toyota production system are explained, production as a functional network of processes and operations are examined, and then the mechanism necessary to make JIT possible in any manufacturing plant is discussed.

Patent literature WO 2018/073422 A2 relates to the use of an interior tracking system for manufacturing control, including fixedly installed transceivers for determining the position of multiple mobile units and the position being determined in particular by evaluating the propagation time of electromagnetic (radio) signals. The interior tracking system is used to assign one of the mobile units to a person in an industrial manufacturing plant that processes steel and/or sheet metal, to determine the position of the assigned person by localizing the assigned mobile unit using the interior tracking system and to integrate the interior tracking system into a manufacturing control system of the industrial manufacturing plant.

Patent literature US 2018/074479 A1 relates to manufacturing evaluation systems including motion sensors configured to output motion data in response to motions of a user in association with manufacturing of an article, a processor communicatively coupled to the motion sensors, a memory module communicatively coupled to the processor, and machine readable instructions stored in the memory module. The machine readable instructions cause the manufacturing evaluation system to perform, when executed by the processor, receiving the motion data output by the sensors, calculating a quality score associated with the article of manufacture based on the motion data, comparing the quality score to a quality score threshold, and providing a notification in response to comparing the quality score to the quality score threshold.

Patent literature EP 2407844 A1 relates to operations of manufacturing equipment, in which for each of tasks performed in an operation of manufacturing equipment, a proficiency of a worker with respect to a task to be performed is obtained from a proficiency DB storing proficiencies of workers with respect to the tasks. A guidance base time determined based on a manufacturing schedule is controlled corresponding to the proficiency of the worker, a guidance control time corresponding to the proficiency of the worker is determined, and guidance is outputted at the guidance control time. The proficiency of the worker with respect to the task is corrected based on task record information including a task content and a task time of a task performed by the worker and on the guidance control time, and the proficiency of the worker with respect to the task stored in the proficiency DB is updated.

### SUMMARY

### [Technical Problem]

When a motion of an operator is analyzed and a deviation from a standard is detected, there are cases in which a product may not be shipped if quality is to be guaranteed, for example, as in Patent Literature 1. However, with such measures, because the deviating motion occurs repeatedly after that, the yield of the product may not be improved.

Therefore, the present invention provides a motion analysis device, a motion analysis method, and a motion analysis program capable of making it difficult for a motion deviating from the standard to recur.

### [Solution to Problem]

The invention is defined by the appended claims.

A motion analysis device according to an aspect of the present disclosure is equipped with an acquisition unit which acquires time-sequential information indicating motions of an operator; a detection unit which detects a deviating motion deviating from a standard motion among the motions of the operator on the basis of the time-sequential information; and an output unit which outputs advice for improving the deviating motion. Here, the fact that the motion of the operator deviates from the standard motion may be determined by quantitatively calculating a degree of coincidence (or a degree of divergence) between the motions and determining that the degree of coincidence is equal to or less than a threshold value. The threshold value may be predetermined, or may be statistically determined on the basis of the degree of coincidence between the motions of a plurality of operators and the standard motion.

According to this aspect, when the deviating motion is detected, since the advice for improving the motion is output, the operator can recognize that the deviating motion has been performed and can know how to improve the motion. Therefore, the motion deviating from the standard does not easily recur.

In the above aspect, the motion analysis device may further include a determination unit which determines a difficulty level of the improvement on the basis of a type of the deviating motion, wherein the output unit may output advice according to the determined difficulty level of the improvement. Here, the difficulty level of improvement may be stored in advance for each type of deviating motion.

According to this aspect, it is possible to show the difficulty level of improvement to the operator who performed the deviating motion or show the difficulty level of improvement to the manager, and it is possible to predict how much effort will be required for improvement.

In the above aspect, the motion analysis device may further include an estimation unit which estimates an effect expected from the improvement.

According to this aspect, by showing the operator or the manager the effect expected from the improvement of the deviating motion, it is possible to give motivation to work on the improvement, and the improvement of the deviating motion is easily established.

In the above aspect, the effect may include reduction of a motion time of the operator.

According to this aspect, it is possible to quantitatively show how much the motion time is shortened by the improvement of the deviating motion, and it is possible to motivate the operator or the manager to work on the improvement, and the improvement of the deviating motion is easily established.

In the above aspect, the motion analysis device may further include a correction unit which corrects the difficulty level depending on a proficiency level of the motion of the operator. Here, the proficiency level may be input from the outside for each operator, or may be calculated by the motion analysis device.

According to this aspect, when there are individual differences in the proficiency level of the motion of the operator, it is possible to correct the difficulty level of improvement of the deviating motion and show a more appropriate difficulty level. This makes it possible to more accurately predict how much effort will be required for improvement.

In the above aspect, the motion analysis device may further include a calculation unit which compares the time-sequential information with time-sequential information indicating the standard motion and calculates the proficiency level.

According to this aspect, the proficiency level of the operator can be calculated by comparing the normal motion of the operator with the standard motion, and the proficiency level can be automatically calculated without inputting the proficiency level of the operator from the outside.

In the above aspect, the output unit may output the advice in a manner according to the proficiency level. Here, the mode according to the proficiency level may be a mode in which, when the proficiency level is high, the advice regarding the deviating motion with a high difficulty level of improvement is shown, and when the proficiency level is low, the advice regarding the deviating motion with a low difficulty level of improvement level is shown.

According to this aspect, advice suitable for the proficiency level of the operator is output, motivation to work on improvement can be given, and improvement of deviating motion is easily established.

In the above aspect, the time-sequential information may include motion information including coordinate values indicating the motion of the operator, and the detection unit may detect the deviating motion on the basis of comparison between the motion information and standard motion information including the coordinate value indicating the standard motion.

According to this aspect, since the motion of the operator and the standard motion can be easily compared by comparing the coordinate values, the calculation load can be further reduced and the deviating motion can be detected.

A motion analysis method according to another aspect of the present disclosure includes acquiring time-sequential information indicating motions of an operator; detecting a deviating motion deviating from a standard motion among the motions of the operator on the basis of the time-sequential information; and outputting advice for improving the deviating motion.

According to this aspect, when the deviating motion is detected, since the advice for improving the motion is output, the operator can recognize that the deviating motion has been performed and can know how to improve the motion. Therefore, the motion deviating from the standard does not easily recur.

A motion analysis program according to another aspect of the present disclosure causes a calculation unit provided in a motion analysis device to function as an acquisition unit which acquires time-sequential information indicating motions of an operator, a detection unit which detects a deviating motion deviating from a standard motion among the motions of the operator on the basis of the time-sequential information, and an output unit which outputs advice for improving the deviating motion.

According to this aspect, when the deviating motion is detected, since the advice for improving the motion is output, the operator can recognize that the deviating motion has been performed and can know how to improve the motion. Therefore, the motion deviating from the standard does not easily recur.

### [Advantageous Effects of Invention]

According to the present invention, it is possible to provide a motion analysis device, a motion analysis method, and a motion analysis program capable of making a motion deviating from the standard less likely to recur.

### BRIEF DESCRIPTION OF THE DRAWINGS

Fig. 1 is a diagram showing a summary of a motion analysis system according to an embodiment of the present invention.
Fig. 2 is a diagram showing a functional block of the motion analysis system according to the present embodiment.
Fig. 3 is a diagram showing a physical configuration of a motion analysis device according to the present embodiment.
Fig. 4 is a diagram showing an example of advice that is output by the motion analysis device according to the present embodiment.
Fig. 5 is a diagram showing an example of a determination result of a deviating motion by the motion analysis device according to the present embodiment.
Fig. 6 is a diagram showing an example of a deviating motion table referred to by the motion analysis device according to the present embodiment.
Fig. 7 is a diagram showing an example of an advice table referred to by the motion analysis device according to the present embodiment.
Fig. 8 is a flowchart of an advice output process executed by the motion analysis system according to the present embodiment.
Fig. 9 is a flowchart of an advice generation process executed by the motion analysis device according to the present embodiment.

### DESCRIPTION OF THE EMBODIMENTS

Hereinafter, an embodiment according to one aspect of the present invention (hereinafter referred to as "the present embodiment") will be described with reference to the drawings. In the figures, the same reference numerals indicate components having the same or similar configurations.

### 1 Application example

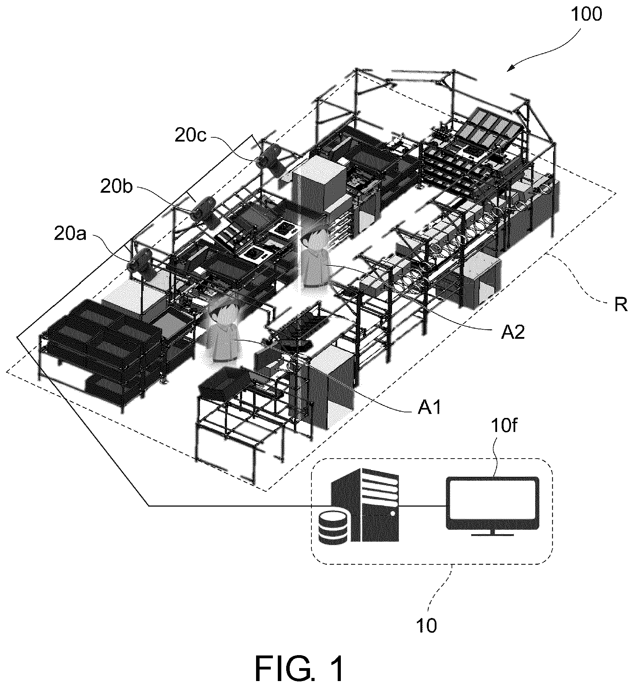

First, an example of a situation in which the present invention is applied will be described using Fig. 1. A motion analysis system 100 according to the present embodiment is equipped with a first photographing unit 20a, a second photographing unit 20b, and a third photographing unit 20c that photograph a moving image showing a motion of an operator executed in a certain operating region R. Although the operating region R of this example is a region including an entire production line, the operating region R may be an arbitrary region, and may be, for example, a region in which a predetermined process is performed or a region in which a predetermined element motion is performed. Here, an element motion is a unit motion performed by an operator, and examples thereof include motions such as picking of parts, arrangement of parts, fixing of parts, and packing of products. In the present embodiment, three processes are performed in the operating region R, and the first photographing unit 20a, the second photographing unit 20b, and the third photographing unit 20c may each photograph a moving image of the hands of an operator who executes a predetermined process.

In this example, a case in which a first operator A1 and a second operator A2 perform a predetermined motion in the operating region R will be described. The first operator A1 can execute motions such as picking, arrangement, and fixing of a first component, and a second operator A2 can execute motions such as picking, arranging, and fixing of a second component. Hereinafter, the first operator A1 and the second operator A2 are collectively referred to as an operator A.

The motion analysis system 100 includes a motion analysis device 10. The motion analysis device 10 is equipped with a detection unit that detects a deviating motion that deviates from a standard motion among the motions of the operator A on the basis of time-sequential information indicating the motion of the operator A such as a moving image, and an output unit that outputs advice for improving the deviating motion. Further, the motion analysis device 10 is equipped with a display unit 10f that displays advice. Here, the fact that the motion of the operator deviates from the standard motion may be determined by quantitatively calculating a degree of coincidence between the motions and determining that the degree of coincidence is equal to or less than a threshold value. The degree of deviation between the motions may be quantitatively calculated, and it may be determined whether there is a deviating motion when the degree of deviation is equal to or greater than the threshold value. Here, the threshold value may be predetermined, or may be statistically determined on the basis of the degree of coincidence (or a degree of divergence) between the motions of a plurality of operators and the standard motions.

Here, the standard motion may be a standard motion that the operator needs to follow. When the standard motion is the standard motion, the detection unit may detect the deviating motion on the condition that the degree of coincidence between the time-sequential information indicating the motion of the operator A and the time-sequential information indicating the standard motion is equal to or less than the threshold value. Hereinafter, a case will be described in which the standard motion is a standard motion, and the detection unit detects the deviating motion on the condition that the degree of coincidence between the time-sequential information indicating the motion of the operator A and the time-sequential information indicating the standard motion is equal to or less than the threshold value.

The display unit 10f displays advice for improving the deviating motion. The display unit 10f may display a graph showing a difficulty level of improvement and an effect expected from the improvement together with the advice. Further, the display unit 10f may display a moving image showing the motion of the operator A and a moving image showing the standard motion together.

As described above, according to the motion analysis device 10 according to the present embodiment, when the deviating motion is detected, because the advice for improving the motion is output, the operator A can recognize that the deviating motion is performed, and can know how to improve the motion. Therefore, the motion deviating from the standard does not easily recur.

### 2 Configuration example

### [Functional configuration]

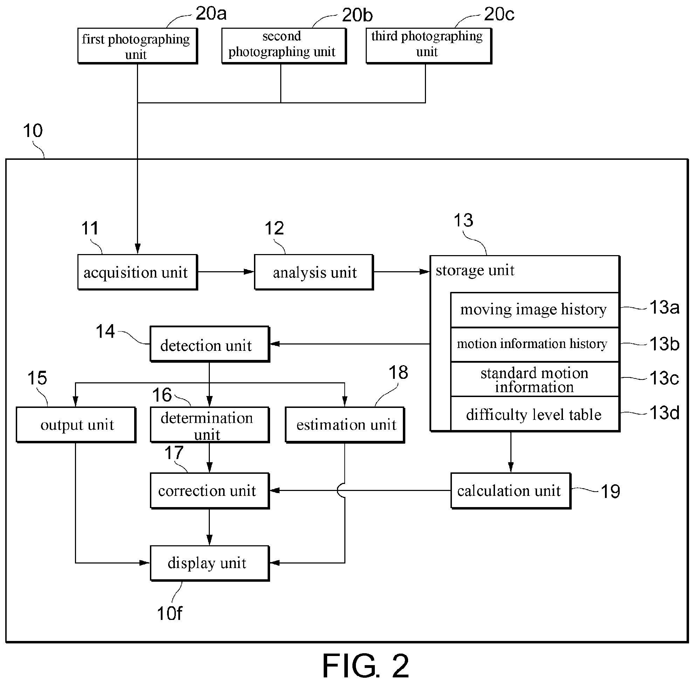

Next, an example of the functional configuration of the motion analysis system 100 according to the present embodiment will be described using Fig. 2. The motion analysis system 100 is equipped with a first photographing unit 20a, a second photographing unit 20b, a third photographing unit 20c, and a motion analysis device 10. The motion analysis device 10 is equipped with an acquisition unit 11, an analysis unit 12, a storage unit 13, a detection unit 14, an output unit 15, a determination unit 16, a correction unit 17, an estimation unit 18, a calculation unit 19, and a display unit 10f.

### <Photographing unit>

The first photographing unit 20a, the second photographing unit 20b, and the third photographing unit 20c may each be made up of a general-purpose camera, and may photograph a moving image including the scene in which the first operator A1 and the second operator A2 perform motions in the operating region R. The first photographing unit 20a, the second photographing unit 20b, and the third photographing unit 20c may each photograph a part of the operating region R, and may photograph a moving image of a region narrower than the operating region R. Specifically, a moving image that is a close-up of the motions executed by the first operator A1 and the second operator A2 may be photographed. The first photographing unit 20a, the second photographing unit 20b, and the third photographing unit 20c may, for example, photograph a moving image that is a close-up of the hands of the first operator A1 and the second operator A2.

Further, the first photographing unit 20a, the second photographing unit 20b, and the third photographing unit 20c may photograph a plurality of moving images in which a plurality of portions of the operating region R are photographed. For example, the first photographing unit 20a mainly photographs a moving image in which the first operator A1 executes the motion, the third photographing unit 20c mainly photographs the moving image in which the second operator A2 executes the motion, and the second photographing unit 20b may photograph both the moving image in which the first operator A1 executes the motion and the moving image in which the second operator A2 executes the motion. Further, the first photographing unit 20a, the second photographing unit 20b, and the third photographing unit 20c may photograph moving images in which different processes are each executed at a plurality of positions in the operating region R.

### <Acquisition unit>

The acquisition unit 11 acquires time-sequential information indicating the motion of the operator A. Here, the time-sequential information may be a moving image showing the motion of the operator A. However, the time-sequential information may be information on coordinate values indicating the motion of the operator A measured by motion capture. The time-sequential information (moving image in this example) acquired by the acquisition unit 11 is transmitted to the storage unit 13 and stored as a moving image history 13a.

### <Analysis unit>

The analysis unit 12 analyzes the moving image showing the motion of the operator A and calculates the motion information including the coordinate values indicating the motion of the operator A. The motion information may be information indicating a displacement of a typical position of the body of the operator A. The typical position of the operator's body may be one position of the body, or may be typically a plurality of positions. The motion information may be information indicating a position of a joint of the operator A in a skeleton model. The analysis unit 12 may calculate motion information including the coordinate values showing the motion of the operator A from the moving image, using the technology disclosed by, for example, Zhe Cao, and three others, "Realtime Multi-Person 2D Pose Estimation using Part Affinity Fields," arXiv: 1611.08050, 2016.

### <Storage unit>

The storage unit 13 stores a moving image history 13a, a motion information history 13b, standard motion information 13c, and a difficulty level table 13d. The moving image history 13a includes a history of moving images photographed by the first photographing unit 20a, the second photographing unit 20b, and the third photographing unit 20c. The motion information history 13b includes a history of motion information calculated by the analysis unit 12. Here, the motion information history 13b may be stored for each operator. The standard motion information 13c includes a history of standard motion information including coordinate values indicating the standard motion. The standard motion information may be calculated by the analysis unit 12 on the basis of the moving image showing the standard motion. The difficulty level table 13d is a table that summarizes the types of deviating motions and the difficulty levels for improving the deviating motion.

### <Detection unit>

The detection unit 14 detects the deviating motion that deviates from the standard motion among the motions of the operator A on the basis of the time-sequential information. The detection unit 14 may detect the deviating motion on the basis of comparison between the motion information including the coordinate values indicating the motion of the operator A and standard motion information including the coordinate values indicating the standard motion. The detection unit 14 calculates, for example, a square error between the coordinate value indicating the position of the predetermined joint of the operator A included in the motion information and the coordinate value indicating the position of the predetermined joint of the operator included in the standard motion information. When the calculated value is equal to or greater than the threshold value, the motion of the operator A at that time may be detected as a deviating motion. In this way, by utilizing the motion information including the coordinate values indicating the motion of the operator, because it is possible to easily compare the motion of the operator with the standard motion by comparing the coordinate values, the deviating motion can be detected, by further reducing the calculation load.

### <Output unit>

The output unit 15 outputs advice for improving the deviating motion. The advice that is output by the output unit 15 may be displayed on the display unit 10f. Further, the advice that is output by the output unit 15 may be transmitted to an external device. The advice that is output by the output unit 15 may include information presented in various modes to users such as administrators and operators. The advice that is output by the output unit 15 may include, for example, voice, a still image, a moving image, and tactile feedback such as vibration. The output unit 15 may be configured to output the advice itself or may be configured to output data for outputting the advice to an external device such as a monitor.

### <Determination unit>

The determination unit 16 determines the difficulty level of improvement on the basis of the type of deviating motion. The determination unit 16 may determine the type of deviating motion detected by the detection unit 14, and may determine the difficulty level for improving the deviating motion by referring to the difficulty level table 13d. Further, the output unit 15 may output advice according to the determined difficulty level of improvement. For example, when the difficulty level of improvement is high, detailed advice may be output as compared with a case where the difficulty level of improvement is low. In this way, it is possible to show the difficulty level of improvement to the operator who performed the deviating motion or show the difficulty level of improvement to the administrator, and to estimate how much effort will be required for improvement.

### <Correction unit>

The correction unit 17 corrects the difficulty level of improvement of the deviating motion according to a proficiency level of the motion of the operator. When the proficiency level of the motion of the operator is low as compared with other operators, the correction unit 17 may correct the difficulty level to a high level, and may not use the difficulty level listed in the difficulty level table 13d as it is. Further, when the proficiency level of the motion of the operator is higher than that of other operators, the correction unit 17 corrects the difficulty level to a low level and may not use the difficulty level listed in the difficulty level table 13d as it is. Here, the proficiency level may be input from the outside for each operator, or may be calculated by the motion analysis device 10. When there are individual differences in the proficiency level of the motion of the operator, the correction unit 17 can correct the difficulty level of improvement of the deviating motion and show a more appropriate difficulty level. This makes it possible to more accurately predict how much effort will be required for improvement.

### <Estimation unit>

The estimation unit 18 estimates the effect expected from improvement of the deviating motion. The estimation unit 18 may estimate the effect expected from the improvement according to the type of deviating motion. By the estimation unit 18 estimating the effect of the improvement and showing the effect expected from the improvement of the deviating motion to the operator or the manager, it is possible to give motivation to work on the improvement, and improvements of the deviating motion are easily established. Further, the effect expected from the improvement may include a reduction in the motion time of the operator. As a result, it is possible to quantitatively show how much the motion time is shortened by improving the deviating motion and motivate the operator or the manager to work on the improvement, and the improvement of the deviating motion is easily established.

### <Calculation unit>

The calculation unit 19 compares the time-sequential information indicating the motion of the operator with the time-sequential information indicating the standard motion, and calculates the proficiency level of the motion of the operator. For example, when the motion time of the operator is shorter than the standard motion time, the calculation unit 19 may calculate the proficiency level of the motion of the operator to a high degree, and when the motion time of the operator is longer than the standard motion time, the calculation unit 19 may calculate the proficiency level of the motion of the operator to a low level. Here, the motion time is the time required for the motion by the operator, and may be calculated on the basis of the time-sequential information indicating the motion of the operator. Further, the standard motion time is the time required for the standard motion, and may be calculated on the basis of the time-sequential information indicating the standard motion. **In** this way, the proficiency level of the operator can be calculated by comparing the normal motion of the operator with the standard motion, and the proficiency level can be automatically calculated without inputting the proficiency level of the operator from the outside.

The output unit 15 may output advice in a mode according to the proficiency level. Here, the mode according to the proficiency level may be a mode in which, when the proficiency level is high, advice regarding the deviating motion with a high difficulty level of improvement is shown, and when the proficiency level is low, advice on the deviating motion with a low difficulty level of improvement is shown. For example, when a list of advice on improvements is displayed, if the proficiency level is high, the advice may be listed in order of high difficulty level of improvement, and if the proficiency level is low, the advice may be listed in order of low difficulty level of improvement. Further, when the advice on improvements is selectively displayed, if the proficiency level is high, the advice regarding the deviating motion with high difficulty level of improvement may be selected and displayed, and if the proficiency level is low, the advice regarding the deviating motion with low difficulty level of improvement level may be displayed. As a result, advice suitable for the proficiency level of the operator can be output, motivation to work on the improvement can be given, and improvement of deviating motion can be easily established.

### [Hardware configuration]

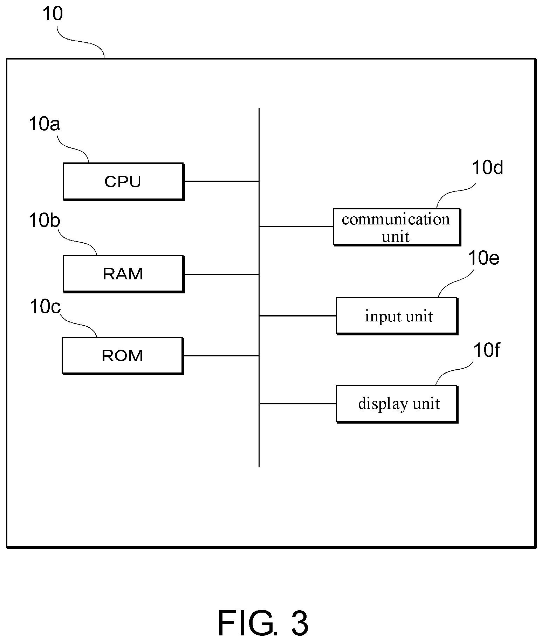

Next, an example of the hardware configuration of the motion analysis device 10 according to the present embodiment will be described using Fig. 3. The motion analysis device 10 has a central processing unit (CPU) 10a corresponding to the calculation device, a random access memory (RAM) 10b corresponding to the storage unit 13, a read only memory (ROM) 10c corresponding to the storage unit 13, a communication unit 10d, an input unit 10e, and a display unit 10f. Each of the configurations is connected to each other via a bus so that data can be transmitted and received. In this example, although a case in which the motion analysis device 10 is made up of a single computer will be described, the motion analysis device 10 may be realized, using a plurality of computers.

The CPU 10a is a control unit that controls execution of a program stored in the RAM 10b or the ROM 10c, calculates data, and processes data. The CPU 10a is a calculation device that detects a deviating motion deviating from the standard motion and executes a program (motion analysis program) that outputs advice for improving the deviating motion. The CPU 10a receives various input data from the input unit 10e and the communication unit 10d, displays the calculation result of the input data on the display unit 10f, and stores the calculation result in the RAM 10b or the ROM 10c.

The RAM 10b is a part of the storage unit 13 capable of writing data, and may be made up of, for example, a semiconductor storage element. The RAM 10b stores data such as an motion analysis program executed by the CPU 10a, and data such as the moving image history 13a, the motion information history 13b, the standard motion information 13c, and the difficulty level table 13d.

The ROM 10c is a part of the storage unit 13 capable of reading data, and may be made up of, for example, a semiconductor storage element. The ROM 10c stores, for example, a motion analysis program and data that is not rewritten.

The communication unit 10d is an interface which connects the motion analysis device 10 to an external device. The communication unit 10d is connected to the first photographing unit 20a, the second photographing unit 20b, and the third photographing unit 20c by, for example, a local area network (LAN), and may receive the moving image from the first photographing unit 20a, the second photographing unit 20b, and the third photographing unit 20c. Further, the communication unit 10d may be connected to the Internet to receive a moving image or motion information via the Internet. Further, the communication unit 10d may transmit the captured moving image and the output advice to the external device via the Internet.

The input unit 10e receives data input from the user, and may include, for example, a keyboard, a mouse, and a touch panel.

The display unit 10f visually displays the calculation result by the CPU 10a, and may be configured by, for example, a liquid crystal display (LCD). An example of the screen displayed on the display unit 10f will be described in detail later.

The motion analysis program may be stored in a storage medium readable by a computer such as RAM 10b or ROM 10c and provided, or may be provided via a communication network connected by the communication unit 10d. In the motion analysis device 10, when the CPU 10a executes the motion analysis program, the motion of the acquisition unit 11, the analysis unit 12, the detection unit 14, the output unit 15, the determination unit 16, the correction unit 17, the estimation unit 18 and the calculation unit 19 described using Fig. 2 are realized. These physical configurations are examples and do not necessarily have to be independent configurations. For example, the motion analysis device 10 may include a large-scale integration (LSI) in which the CPU 10a and the RAM 10b or ROM 10c are integrated.

### 3 Motion example

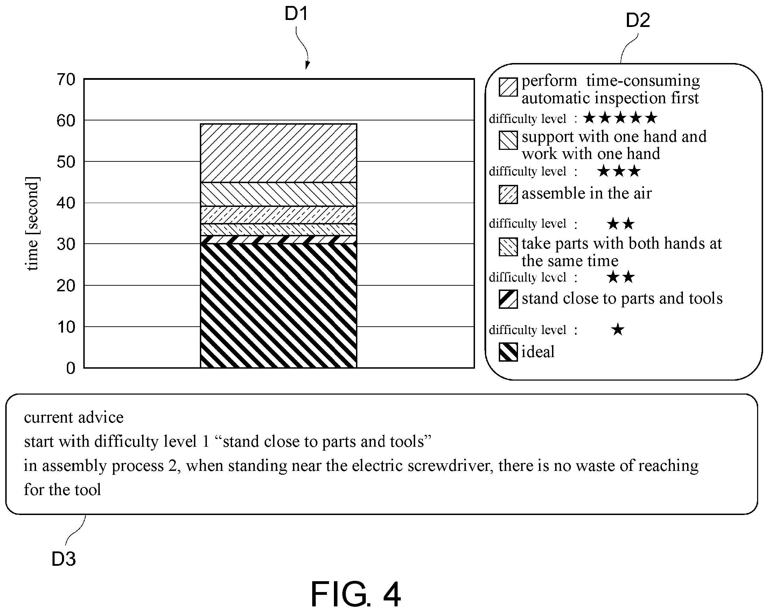

Fig. 4 is a diagram showing an example of advice that is output by the motion analysis device 10 according to the present embodiment. In Fig. 4, a graph D1 showing the expected effect by improving the deviating motion, a legend D2 explaining the difficulty level of the improvement, and an improvement advice D3 are shown. In this example, the deviating motion is a motion that deviates from "standing close to parts and tools", "taking parts at the same time with both hands", "assembling in the air", "supporting with one hand and working with one hand" and "performing the time-consuming automatic inspection first".

The output unit 15 outputs a graph D1 showing the effect expected by improving the deviating motion. Graph D1 shows the excess time from the ideal motion time by a stacked histogram. Here, the ideal motion time is the motion time when the deviation motion is not performed. According to the graph D1, the ideal motion time is 30 seconds, whereas the time actually required for motion of the operator is less than 60 seconds. Graph D1 shows the excess time caused by each deviating motion as a histogram, and visually shows how much the motion time is shortened when the deviating motion is improved and the ideal motion can be performed. By displaying the graph D1 in this way, the expected effect of the improvement of the deviating motion can be visually shown, motivation working on the improvement can be given to the operator or the manager, and the improvement of the deviating motion is easily established.

Legend D2 shows the contents of the difficulty level table 13d, and shows that as the number of stars is large, the deviating motion has high difficulty level to be improved. In the case of this example, the difficulty level of improvement of the deviating motion regarding "standing near a part or tool" is "1 (one star)", and the difficulty level of improvement is the lowest among those listed. In addition, the difficulty level of improvement of the deviating motion regarding "taking parts at the same time with both hands" is "2 (two stars)", and the difficulty level of improvement of the deviating motion regarding "assembling in the air" is "2 (two stars)". Furthermore, the difficulty level of improvement of the deviating motion regarding "supporting with one hand and working with one hand" is "3 (three stars)". Finally, the difficulty level of improvement of the deviating motion regarding "performing time-consuming automatic inspection first" is "5 (five stars)", and the difficulty level of improvement is the highest among those listed.

Operators and managers can easily compare the difficulty levels shown in Graph D1 and Legend D2 to easily understand what difficulty level deviating motions can be improved and how much the motion time can be shortened.

Advice D3 includes the content of instructing which of the multiple types of deviating motions performed by the operator need to be improved, and the reason for the improvement. In this example, as "current advice", start with difficulty level 1 "stand close to parts and tool", and the content that instructs the improvement of the deviating motion regarding "standing near the parts and tools" is described. Further, in this example, as advice D3, "in assembly process 2, when standing near the electric screwdriver, there is no waste of reaching for the tool", and the reason for improvement is described. In this way, when a deviating motion is detected, since advice for improving the motion is output, the operator can recognize that the deviating motion has been performed and can know how to improve the motion. Therefore, the motion deviating from the standard is hard to recur.

In this example, the output unit 15 outputs advice in order of low difficulty level of improvement. That is, among the five types of deviating motions shown in the graph D1 and the legend D2, the content instructing the improvement of the deviating motions regarding "standing near a part or tool", which is the lowest difficulty level of improvement, is shown. As a result, the deviating motion can be improved in order of low difficulty level of improvement, the resistance of the operator or the manager working on the improvement can be reduced, and the probability that the deviating motion will reoccur can be further reduced.

However, the output unit 15 may output advice in order of the great effect estimated by the estimation unit 18. In the case of this example, since the effect of the improvement is measured by the motion time that can be shortened, the output unit 15 may output the advice for improving the detected multiple types of deviating motions in order of the great expected reduction in the motion time. More specifically, in the case of this example, since the deviation motion regarding "performing the time-consuming automatic inspection first" has the largest reduction in the motion time expected by the improvement, the output unit 15 may indicate the content instructing the improvement of the deviating motion regarding "performing time-consuming automatic inspection first". In this way, the deviating motion can be improved in order of the great expected effect of the improvement, the motivation for the operator or the manager working on the improvement can be increased, and the probability that the deviating motion will reoccur can be reduced.

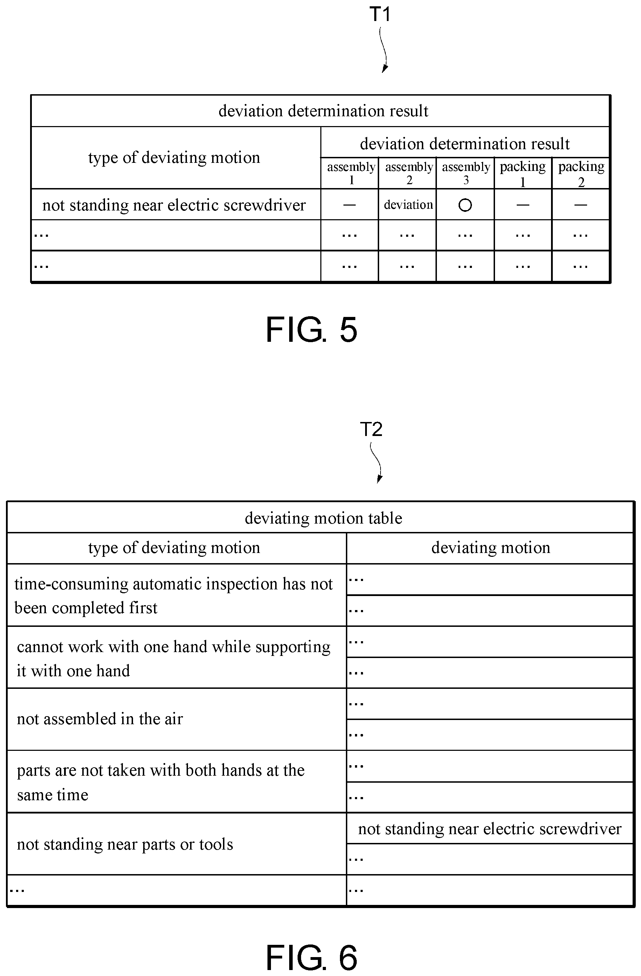

Fig. 5 is a diagram showing an example of the determination result T1 of the deviating motion by the motion analysis device 10 according to the present embodiment. Fig. 5 shows whether the deviating motion is detected in each process for each type of deviating motion.

In this example, for the deviating motion of "not standing near the electric screwdriver", "deviation" is detected in the process of "assembly 2". On the other hand, the process "assembly 3" is indicated by "O", indicating that the deviating motion was not detected. Further, in the process of "assembly 1", "packing 1" and "packing 2", the deviating motion of "not standing near the electric screwdriver" is not detected and is indicated by "-".

The motion analysis device 10 may store the presence or absence of the deviating motion for each process by storing the determination result T1 of the deviating motion. Further, the motion analysis device 10 may store the determination result T1 of the deviating motion for each operator or each time zone.

Fig. 6 is a diagram showing an example of the deviating motion table T2 referred to by the motion analysis device 10 according to the present embodiment. The deviating motion table T2 of this example is a table summarizing specific deviating motions for each type of deviating motion.

In this example, the types of deviating motions indicate the types such as "the time-consuming automatic inspection has not been completed first", "cannot work with one hand while supporting it with one hand", "not assembled in the air", "parts are not taken with both hands at the same time" and "not standing near parts and tools". The motion analysis device 10 may output the legend D2 shown in Fig. 4 with reference to the deviating motion table T2.

In this example, as the specific content of the deviating motion, the content of "not standing near the electric screwdriver" is shown for the type of deviating motion "not standing near the parts or tools". When the motion analysis device 10 detects the deviating motion, the motion analysis device 10 may specify not only the type of the deviating motion but also the specific content of the deviating motion, referring to the deviating motion table T2.

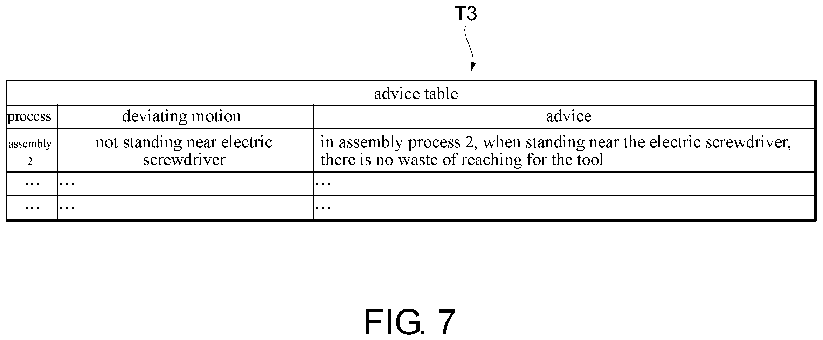

Fig. 7 is a diagram showing an example of the advice table T3 referred to by the motion analysis device 10 according to the present embodiment. The advice table T3 is a table summarizing advice for deviating motions detected in each process.

In this example, in the process of "assembly 2", a deviating motion of "not standing near the electric screwdriver" is detected, and the advice "in assembly process 2, when standing near the electric screwdriver, there is no waste of reaching for the tool" is stored for the deviating motion. When the motion analysis device 10 detects a deviating motion of "not standing near the electric screwdriver" in the process of "assembly 2", the motion analysis device 10 may output the advice that "in assembly process 2, when standing near the electric screwdriver, there is no waste of reaching for the tool" is stored for the deviating motion", referring to the advice table T3. The advice D3 shown in Fig. 4 is an example in which the advice is output according to the advice table T3 of this example.

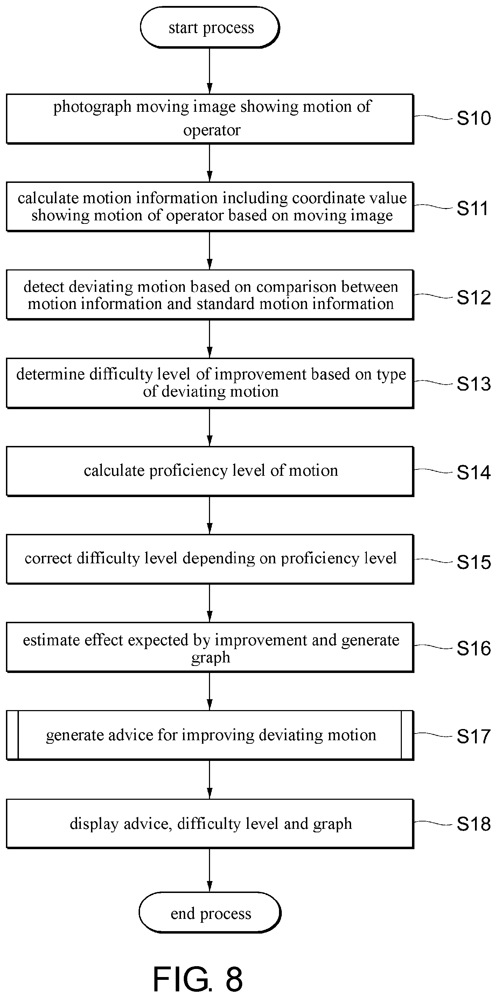

Fig. 8 is a flowchart of the advice output process executed by the motion analysis system 100 according to the present embodiment. First, the first photographing unit 20a, the second photographing unit 20b, and the third photographing unit 20c photograph a moving image showing the motion of the operator (S10).

The motion analysis device 10 calculates motion information including coordinate values indicating the motion of the operator on the basis of the moving image (S11). Further, the motion analysis device 10 detects the deviating motion on the basis of comparison between the motion information and the standard motion information (S12).

After that, the motion analysis device 10 determines the difficulty level of improvement on the basis of the type of deviating motion (S13). The motion analysis device 10 may determine the difficulty level for improving the deviating motion by referring to the difficulty level table 13d.

The motion analysis device 10 calculates the proficiency level of motions regarding the operator (S14). The proficiency level of the motion may be calculated by comparing, for example, the motion time of the operator with the motion time of the standard motion.

The motion analysis device 10 corrects the difficulty level depending on the proficiency level (S15). The motion analysis device 10 may correct the difficulty level to be high for an operator with low proficiency level, and may correct the difficulty level to be low for an operator with high proficiency level.

The motion analysis device 10 estimates the effect expected from the improvement and generates a graph (S16). Here, the effect expected by the improvement may be the reduction range of the motion time, and the graph may visually show how much the motion time is shortened by the improvement of the deviating motion.

The motion analysis device 10 generates advice for improving the deviating motion (S17). The details of the advice generation process will be described with reference to the following figure.

Finally, the motion analysis device 10 displays the advice, the difficulty level, and the graph on the display unit 10f (S18). The motion analysis device 10 may output advice, difficulty level, and a graph to an external device. Thys, the advice output process is completed.

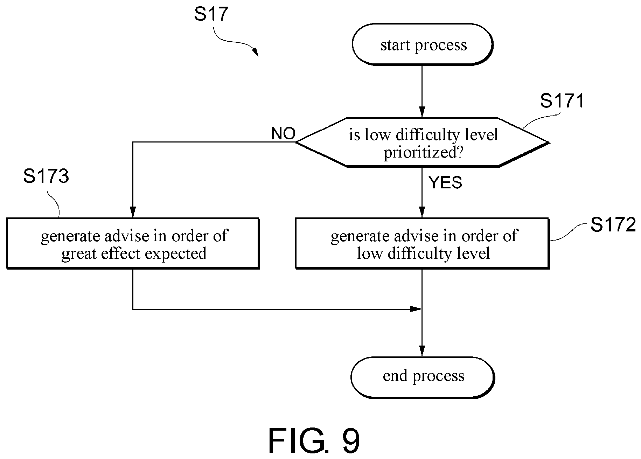

Fig. 9 is a flowchart of the advice generation process executed by the motion analysis system 100 according to the present embodiment. First, the motion analysis device 10 determines whether to give priority to the advice regarding the deviating motion with a low difficult level of improvement (S171). Whether to give priority to advice regarding the deviating motion with a low difficulty level of improvement may be selectable by the user and may be set in advance.

When giving priority to advice regarding the deviating motion with a low difficulty level of improvement (S171: YES), the motion analysis device 10 generates advice in order of low difficulty level of improvement (S172). On the other hand, when the advice regarding the deviating motion with a low difficulty level of improvement is not prioritized (S171: NO), the motion analysis device 10 generates the advice in order of the great effect expected by the improvement (S173). Thus, the advice generation process is completed.

The invention is set out in the appended set of claims.

## Claims

1. A motion analysis device (10) **characterized by**, comprising:
an acquisition unit (11) which acquires time-sequential information indicating motions of an operator performed on a product in a production line;
a detection unit (14) which detects a deviating motion deviating from a standard motion among the motions of the operator on the basis of the time-sequential information;
an output unit (15) which outputs advice for improving the deviating motion;
**characterized by**
a determination unit (16) which determines a difficulty level to improve the deviating motion for the operator such that a probability of the deviating motion being recurring is reduced, wherein the difficulty level of the improvement is determined on the basis of a difficulty level table in which each of a plurality types of deviating motions and a corresponding difficulty level of improvement are listed,
wherein the output unit (15) outputs advice according to the determined difficulty level of the improvement so as to instruct the operator to improve the deviating motion; and
a correction unit (17) which corrects the difficulty level to improve the deviating motion for the operator depending on a proficiency level of the motion of the operator.

2. The motion analysis device (10) according to claim 1, further comprising:
an estimation unit (18) which estimates an effect expected from the improvement.

3. The motion analysis device (10) according to claim 2, wherein the effect includes a reduction of a motion time of the operator.

4. The motion analysis device (10) according to claim 1, further comprising:
a calculation unit (19) which compares the time-sequential information with time-sequential information indicating the standard motion and calculates the proficiency level.

5. The motion analysis device (10) according to claim 4, wherein the output unit (15) outputs the advice in a manner according to the proficiency level.

6. The motion analysis device (10) according to any one of claims 1 to 5, wherein the time-sequential information includes motion information including coordinate values indicating the motion of the operator, and
the detection unit (14) detects the deviating motion on the basis of comparison between the motion information and standard motion information including the coordinate value indicating the standard motion.

7. A motion analysis method adapted to a motion analysis device (10) having an acquisition unit (11), a detection unit (14), an output unit (15), a determination unit (16), and a correction unit (17), the motion analysis method being **characterized by**, comprising:
acquiring, by the acquisition unit (11), time-sequential information indicating motions of an operator performed on a product in a production line;
detecting, by the detection unit (14), a deviating motion deviating from a standard motion among the motions of the operator on the basis of the time-sequential information; and
outputting, by the output unit (15), advice for improving the deviating motion;
**characterized by**
determining, by the determination unit (16), a difficulty level to improve the deviating motion for the operator such that a probability of the deviating motion being recurring is reduced, wherein the difficulty level of the improvement is determined on the basis of a difficulty level table in which each of a plurality types of deviating motions and a corresponding difficulty level of improvement are listed;
wherein an advice is output by the output unit (15) according to the determined difficulty level of the improvement so as to instruct the operator to improve the deviating motion; and
correcting, by the correction unit (17), the difficulty level to improve the deviating motion for the operator depending on a proficiency level of the motion of the operator.

8. A motion analysis program which causes a calculation unit (19) provided in a motion analysis device (10), the motion analysis program **characterized by**, to function as
an acquisition unit (11) which acquires time-sequential information indicating motions of an operator performed on a product in a production line,
a detection unit (14) which detects a deviating motion deviating from a standard motion among the motions of the operator on the basis of the time-sequential information, and
an output unit (15) which outputs advice for improving the deviating motion;
**characterized by**
a determination unit (16) which determines a difficulty level to improve the deviating motion for the operator such that a probability of the deviating motion being recurring is reduced, wherein the difficulty level of the improvement is determined on the basis of a difficulty level table in which each of a plurality types of deviating motions and a corresponding difficulty level of improvement are listed,
wherein the output unit (15) outputs advice according to the determined difficulty level of the improvement so as to instruct the operator to improve the deviating motion; and
a correction unit (17) which corrects the difficulty level to improve the deviating motion for the operator depending on a proficiency level of the motion of the operator.

## Patentansprüche

1. Bewegungsanalysevorrichtung (10), **gekennzeichnet durch** umfassend:
eine Erfassungseinheit (11), die zeitsequenzielle Informationen erfasst, die Bewegungen eines Bedieners anzeigen, die an einem Produkt in einer Produktionslinie ausgeführt werden;
eine Erkennungseinheit (14), die auf der Grundlage der zeitsequenziellen Informationen eine von einer Standardbewegung abweichende Abweichungsbewegung unter den Bewegungen des Bedieners erkennt;
eine Ausgabeeinheit (15), die eine Empfehlung zur Verbesserung der Abweichungsbewegung ausgibt;
**gekennzeichnet durch**
eine Bestimmungseinheit (16), die einen Schwierigkeitsgrad zur Verbesserung der Abweichungsbewegung für den Bediener so bestimmt, dass eine Wahrscheinlichkeit eines erneuten Auftretens der Abweichungsbewegung verringert wird, wobei der Schwierigkeitsgrad der Verbesserung auf der Grundlage einer Schwierigkeitsgradtabelle bestimmt wird, in der jede einer Vielzahl von Arten von Abweichungsbewegungen und ein entsprechender Schwierigkeitsgrad der Verbesserung aufgeführt sind,
wobei die Ausgabeeinheit (15) die Empfehlung entsprechend dem bestimmten Schwierigkeitsgrad der Verbesserung ausgibt, um den Bediener anzuweisen, die Abweichungsbewegung zu verbessern; und
eine Korrektureinheit (17), die den Schwierigkeitsgrad zur Verbesserung der Abweichungsbewegung für den Bediener in Abhängigkeit von einem Fertigkeitsgrad der Bewegung des Bedieners korrigiert.

2. Bewegungsanalysevorrichtung (10) nach Anspruch 1, ferner umfassend:
eine Schätzeinheit (18), die einen von der Verbesserung zu erwartenden Effekt schätzt.

3. Bewegungsanalysevorrichtung (10) nach Anspruch 2, wobei der Effekt eine Verringerung einer Bewegungszeit des Bedieners enthält.

4. Bewegungsanalysevorrichtung (10) nach Anspruch 1, ferner umfassend:
eine Berechnungseinheit (19), die die zeitsequenziellen Informationen mit zeitsequenziellen Informationen vergleicht, die die Standardbewegung angeben, und den Fertigkeitsgrad berechnet.

5. Bewegungsanalysevorrichtung (10) nach Anspruch 4, wobei die Ausgabeeinheit (15) die Empfehlung in einer Weise ausgibt, die dem Fertigkeitsgrad entspricht.

6. Bewegungsanalysevorrichtung (10) gemäß einem der Ansprüche 1 bis 5, wobei die zeitsequenziellen Informationen Bewegungsinformationen enthalten, die Koordinatenwerte enthalten, die die Bewegung des Bedieners anzeigen, und
die Erfassungseinheit (14) die Abweichungsbewegung auf der Grundlage eines Vergleichs zwischen den Bewegungsinformationen und den Standardbewegungsinformationen erfasst, die den Koordinatenwert enthalten, der die Standardbewegung anzeigt.

7. Bewegungsanalyseverfahren, das an eine Bewegungsanalysevorrichtung (10) angepasst ist, aufweisend eine Erfassungseinheit (11), eine Erkennungseinheit (14), eine Ausgabeeinheit (15), eine Bestimmungseinheit (16) und eine Korrektureinheit (17), wobei das Bewegungsanalyseverfahren **gekennzeichnet ist durch** umfassend:
Erfassen von zeitsequenziellen Informationen, die Bewegungen eines Bedieners anzeigen, die an einem Produkt in einer Produktionslinie ausgeführt werden, durch die Erfassungseinheit (11);
Erfassen einer von einer Standardbewegung abweichenden Abweichungsbewegung unter den Bewegungen des Bedieners auf der Grundlage der zeitsequenziellen Informationen durch die Erfassungseinheit (14); und
Ausgeben einer Empfehlung zur Verbesserung der Abweichungsbewegung durch die Ausgabeeinheit (15);
**gekennzeichnet durch**
Bestimmen eines Schwierigkeitsgrades zur Verbesserung der Abweichungsbewegung für den Bediener durch die Bestimmungseinheit (16), sodass eine Wahrscheinlichkeit eines erneuten Auftretens der Abweichungsbewegung verringert wird, wobei der Schwierigkeitsgrad der Verbesserung auf der Grundlage einer Schwierigkeitsgradtabelle bestimmt wird, in der jede einer Vielzahl von Arten von Abweichungsbewegungen und ein entsprechender Schwierigkeitsgrad der Verbesserung aufgeführt sind;
wobei die Ausgabeeinheit (15) eine Empfehlung entsprechend dem bestimmten Schwierigkeitsgrad der Verbesserung ausgibt, um den Bediener anzuweisen, die Abweichungsbewegung zu verbessern; und
Korrektur des Schwierigkeitsgrades zur Verbesserung der Abweichungsbewegung für den Bediener durch die Korrektureinheit (17) in Abhängigkeit von einem Fertigkeitsgrad der Bewegung des Bedieners.

8. Bewegungsanalyseprogramm, das eine in einer Bewegungsanalysevorrichtung (10) bereitgestellte Berechnungseinheit (19) veranlasst, wobei das Bewegungsanalyseprogramm **gekennzeichnet ist durch** funktionieren als
eine Erfassungseinheit (11), die zeitsequenzielle Informationen erfasst, die Bewegungen eines Bedieners anzeigen, die an einem Produkt in einer Produktionslinie ausgeführt werden,
eine Erkennungseinheit (14), die auf der Grundlage der zeitsequenziellen Informationen eine von einer Standardbewegung abweichende Abweichungsbewegung unter den Bewegungen des Bedieners erkennt, und
eine Ausgabeeinheit (15), die eine Empfehlung zur Verbesserung der Abweichungsbewegung ausgibt;
**gekennzeichnet durch**
eine Bestimmungseinheit (16), die einen Schwierigkeitsgrad zur Verbesserung der Abweichungsbewegung für den Bediener so bestimmt, dass eine Wahrscheinlichkeit eines erneuten Auftretens der Abweichungsbewegung verringert wird, wobei der Schwierigkeitsgrad der Verbesserung auf der Grundlage einer Schwierigkeitsgradtabelle bestimmt wird, in der jede einer Vielzahl von Arten von Abweichungsbewegungen und ein entsprechender Schwierigkeitsgrad der Verbesserung aufgeführt sind,
wobei die Ausgabeeinheit (15) die Empfehlung entsprechend dem bestimmten Schwierigkeitsgrad der Verbesserung ausgibt, um den Bediener anzuweisen, die Abweichungsbewegung zu verbessern; und
eine Korrektureinheit (17), die den Schwierigkeitsgrad zur Verbesserung der Abweichungsbewegung für den Bediener in Abhängigkeit von einem Fertigkeitsgrad der Bewegung des Bedieners korrigiert.

## Revendications

1. Dispositif d'analyse de mouvement (10) **caractérisé en ce qu'**il comprend :
une unité d'acquisition (11) qui acquiert des informations séquentielles dans le temps indiquant les mouvements d'un opérateur effectués sur un produit dans une chaîne de production;
une unité de détection (14) qui détecte un mouvement déviant s'écartant d'un mouvement standard parmi les mouvements de l'opérateur sur la base des informations séquentielles dans le temps ;
une unité de sortie (15) qui émet des conseils pour améliorer le mouvement déviant;
**caractérisé en ce qu'**
une unité de détermination (16) qui détermine un niveau de difficulté pour améliorer le mouvement déviant pour l'opérateur de manière à réduire la probabilité que le mouvement déviant se reproduise, dans lequel le niveau de difficulté de l'amélioration est déterminé sur la base d'un tableau de niveaux de difficulté dans lequel sont répertoriés chacun d'une pluralité de types de mouvements déviants et un niveau de difficulté d'amélioration correspondant,
dans lequel l'unité de sortie (15) émet des conseils en fonction du niveau de difficulté déterminé de l'amélioration afin d'instruire l'opérateur à améliorer le mouvement déviant; et
une unité de correction (17) qui corrige le niveau de difficulté pour améliorer le mouvement déviant pour l'opérateur en fonction d'un niveau de compétence du mouvement de l'opérateur.

2. Dispositif d'analyse de mouvement (10) selon la revendication 1, comprenant en outre:
une unité d'estimation (18) qui estime un effet attendu de l'amélioration.

3. Dispositif d'analyse de mouvement (10) selon la revendication 2, dans lequel l'effet comprend une réduction du temps de mouvement de l'opérateur.

4. Dispositif d'analyse de mouvement (10) selon la revendication 1, comprenant en outre:
une unité de calcul (19) qui compare les informations séquentielles dans le temps avec des informations séquentielles dans le temps indiquant le mouvement standard et calcule le niveau de compétence.

5. Dispositif d'analyse de mouvement (10) selon la revendication 4, dans lequel l'unité de sortie (15) émet le conseil d'une manière conforme au niveau de compétence.

6. Dispositif d'analyse de mouvement (10) selon l'une quelconque des revendications 1 à 5, dans lequel les informations séquentielles dans le temps comprennent des informations de mouvement comprenant des valeurs de coordonnées indiquant le mouvement de l'opérateur, et
l'unité de détection (14) détecte le mouvement déviant sur la base d'une comparaison entre les informations de mouvement et les informations de mouvement standard comprenant la valeur de coordonnée indiquant le mouvement standard.

7. Procédé d'analyse de mouvement adapté à un dispositif d'analyse de mouvement (10) comportant une unité d'acquisition (11), une unité de détection (14), une unité de sortie (15), une unité de détermination (16) et une unité de correction (17), le procédé d'analyse de mouvement étant **caractérisé en ce qu'**il comprend :
l'acquisition, par l'unité d'acquisition (11), d'informations séquentielles dans le temps indiquant les mouvements d'un opérateur effectués sur un produit dans une chaîne de production;
la détection, par l'unité de détection (14), d'un mouvement déviant s'écartant d'un mouvement standard parmi les mouvements de l'opérateur sur la base des informations séquentielles dans le temps; et
la sortie, par l'unité de sortie (15), d'un conseil pour améliorer le mouvement déviant;
**caractérisé par**
déterminer, par l'unité de détermination (16), un niveau de difficulté pour améliorer le mouvement déviant pour l'opérateur de telle sorte que la probabilité que le mouvement déviant se reproduise soit réduite, dans lequel le niveau de difficulté de l'amélioration est déterminé sur la base d'un tableau de niveaux de difficulté dans lequel chacun d'une pluralité de types de mouvements déviants et un niveau de difficulté d'amélioration correspondant sont répertoriés ;
dans lequel un conseil est émis par l'unité de sortie (15) en fonction du niveau de difficulté déterminé de l'amélioration afin d'instruire l'opérateur à améliorer le mouvement déviant; et
corriger, par l'unité de correction (17), le niveau de difficulté pour améliorer le mouvement déviant pour l'opérateur en fonction d'un niveau de compétence du mouvement de l'opérateur.

8. Programme d'analyse de mouvement qui fait fonctionner une unité de calcul (19) prévue dans un dispositif d'analyse de mouvement (10), le programme d'analyse de mouvement étant **caractérisé par** fonctionner comme
une unité d'acquisition (11) qui acquiert des informations séquentielles dans le temps indiquant les mouvements d'un opérateur effectués sur un produit dans une chaîne de production,
une unité de détection (14) qui détecte un mouvement déviant s'écartant d'un mouvement standard parmi les mouvements de l'opérateur sur la base des informations séquentielles dans le temps, et
une unité de sortie (15) qui émet des conseils pour améliorer le mouvement déviant;
**caractérisé par**
une unité de détermination (16) qui détermine un niveau de difficulté pour améliorer le mouvement déviant pour l'opérateur de telle sorte que la probabilité que le mouvement déviant se reproduise soit réduite, dans lequel le niveau de difficulté de l'amélioration est déterminé sur la base d'un tableau de niveaux de difficulté dans lequel chacun d'une pluralité de types de mouvements déviants et un niveau de difficulté d'amélioration correspondant sont répertoriés,
dans lequel l'unité de sortie (15) émet des conseils en fonction du niveau de difficulté déterminé de l'amélioration afin d'instruire l'opérateur à améliorer le mouvement déviant; et
une unité de correction (17) qui corrige le niveau de difficulté pour améliorer le mouvement déviant pour l'opérateur en fonction d'un niveau de compétence du mouvement de l'opérateur.
